# EUROPÄISCHE PATENTSCHRIFT

(11) **EP 1 531 533 B1**
(45) Veröffentlichungstag und Bekanntmachung des Hinweises auf die Patenterteilung: **24.01.2007**
(21) Anmeldenummer: 04026495.4
(22) Anmeldetag: 09.11.2004
(51) Int. Cl.: H02J 1/06, H02J 3/14

(54) **Versorgungsschaltung zur permanenten Versorgung eines Verbrauchers über eine schaltbare Leitung**
Circuit for permanently supplying a load over a switchable line
Circuit pour l'alimentation permanente par une ligne commutable

(30) Priorität: 14.11.2003 DE 10353135
(43) Veröffentlichungstag der Anmeldung: 18.05.2005
(73) Patentinhaber: Merten GmbH & Co. KG, 51674 Wiehl (DE)
(72) Erfinder: Schlechtingen, Peter, 51597 Morsbach (DE)
(74) Vertreter: Selting, Günther

(56) Entgegenhaltungen:
- EP-A- 0 689 351
- EP-A- 0 911 775
- DE-A- 2 024 092
- DE-A1- 19 534 564
- DE-C- 514 564
- DE-U1- 20 116 719

## Beschreibung

Die Erfindung betrifft eine Versorgungsschaltung zur schaltbaren Versorgung eines ersten Verbrauchers und zur permanenten Versorgung eines zweiten Verbrauchers durch eine mit einem Netzschalter schaltbare zweiadrige Leitung.

Üblicherweise wird in der Hausinstallation eine Leuchte durch einen Netzschalter eingeschaltet. Der Netzschalter ist mit einer Phasenleitung verbunden. Eine geschaltete Phasenleitung führt von dem Netzschalter zu dem Verbraucher, beispielsweise einer Deckenleuchte.

Wenn in einem Gebäude Sensoren oder andere Verbraucher installiert werden, die permanent eingeschaltet bleiben müssen, z.B. Brandmelder, ist es erforderlich, hierfür eigene Leitungen zu verlegen. Derartige Sensoren arbeiten im Allgemeinen mit Gleichspannung von 5 bis 24 V. Daher ist ein erheblicher Aufwand für Netzteile zur Erzeugung dieser Gleichspannung erforderlich. Solche Netzteile haben einen hohen Platzbedarf. Bei den Sensoren muss auf der Netzseite stets ein dreiadriges Kabel mit Phasenleiter, Nullleiter und Schutzleiter verlegt werden, was in der Regel die Neuverlegung eines Kabels erfordert, da vorhandene Kabel nicht genügend freie Adern haben. Was aber immer vorhanden ist, ist der Deckenauslass in der Raummitte mit einer dreiadrigen oder zweiadrigen Leitung zum Netzschalter neben der Tür. Eine solche vorhandene zweiadrige oder dreiadrige Leitung ermöglicht nicht die Versorgung eines Verbrauchers, der permanent angeschlossen ist und dauernden Strombedarf hat. Bei einer dreiadrigen Leitung darf der Schutzleiter, der ausschließlich für Erdungszwecke vorgesehen ist, nicht als Versorgungsleitung benutzt werden.

Wenn beispielsweise an einer Raumdecke ein Auslass eines zweiadrigen Kabels, mit oder ohne Schutzleiter, vorgesehen ist, der für einen ersten Verbraucher, beispielsweise eine Leuchte, bestimmt ist, muss bei zusätzlicher Anbringung eines Rauchmelders an der Raumdecke ein neues Kabel verlegt werden, das ausschließlich für die Versorgung des Rauchmelders bestimmt ist. Das nachträgliche Verlegen von Leitungen in Altbauten ist schwierig.

DE 201 16 791 U1 beschreibt eine Nachtlichtschaltung mit Hochleistungs-LEDs. Hierbei ist eine Lampe zusätzlich mit LEDs versehen, die auch bei ausgeschaltetem Lichtschalter leuchten sollen und somit permanent mit Strom versorgt werden. Dieser Stand der Technik entspricht im Wesentlichen dem Oberbegriff des Patentanspruchs 1, wobei dem Netzschalter eine Reihenschaltung aus einem Widerstand und einem Kondensator parallel geschaltet ist.

DE 195 34 564 beschreibt ein passives Infrarot-Alarmsystem für den Objektschutz. Hierbei ist ein Alarmgerät mit integrierten Bewegungsmeldern zentral an der Decke eines Raumes angeordnet. Dieses Alarmgerät wird ständig mit Strom versorgt und hat eine gemeinsame Stromversorgung mit einer Deckenleuchte, die über den Lichtschalter und einen parallel zum Lichtschalter angeschlossenen Kondensator schaltbar ist. Während des Betriebes über den Kondensator schaltet das Alarmgerät mit einem Relais die niederohmige Leuchte ab, damit das Spannungspotential sich nicht gegen Null verschiebt.

Der Erfindung liegt die Aufgabe zugrunde, eine Versorgungsschaltung zu schaffen, die geeignet ist zur schaltbaren Versorgung eines ersten Verbrauchers und zur permanenten Versorgung eines zweiten Verbrauchers durch eine schaltbare zweiadrige Leitung, bei der das Schließen des Netzschalters sicher erkannt wird, um danach durch Schließen des weiteren Schalters den ersten Verbraucherkreis zu schließen.

Die erfindungsgemäße Versorgungsschaltung weist die Merkmale des Patentanspruchs 1 auf. Hiernach ist vorgesehen, dass das Schließen des weiteren Schalters durch einen in dem zweiten Verbraucherkreis liegenden Stromdetektor veranlasst wird, wenn der im zweiten Verbraucherkreis fließende Strom infolge der Einschaltung des Netzschalters einen Schwellwert überschreitet.

Der zur Versorgungsschaltung gehörende erste Blindwiderstand überbrückt den Netzschalter. Dadurch wird erreicht, dass bei geöffnetem (gesperrtem) Netzschalter über den Blindwiderstand durch die Leitung ein Strom fließt, der für die Versorgung des zweiten Verbrauchers geeignet ist. Bei geschlossenem (leitendem) Netzschalter erfolgt die Versorgung des ersten und des zweiten Verbrauchers über den Netzschalter. Auf diese Weise ist es möglich, zwei Verbraucher, die an einem von dem Netzschalter entfernten Ort installiert sind und von denen einer schaltbar ist, über eine zweidrähtige Leitung zu versorgen, wobei der zweite Verbraucher permanent mit Strom versorgt wird.

Die Erfindung eignet sich insbesondere zur Ausnutzung der in Gebäuden vorhandenen Netzinstallation für den zusätzlichen Betrieb von Sensoren, wie Rauchmelder oder Anwesenheitssensoren. Die Erfindung ist aber auch anwendbar für nichtsensorische Geräte, die dauernd in Betriebsbereitschaft sein müssen, wie beispielsweise Funkmelder oder Funkempfänger. Die Erfindung erfordert lediglich die Montage der Versorgungsschaltung in der Nähe des ersten Verbrauchers, wodurch dann der zweite Verbraucher permanent versorgt werden kann, ohne dass eine zusätzliche Leitung zum Heranführen der Netzspannung zu verlegen ist.

Der Blindwiderstand ist vorzugsweise eine Kapazität aus mindestens einem Kondensator. Der Kondensator bewirkt, dass parallel zum Netzschalter kein Gleichstrom fließen kann. Für die Netzspannung als Wechselspannung bildet er eine Impedanz, über die der Gleichrichter versorgt wird. Der Gleichrichter wandelt die Wechselspannung in eine Gleichspannung um, die stabilisiert werden kann, um eine definierte Versorgungsgleichspannung für den zweiten Verbraucher zu bilden.

Um sicherzustellen, dass der erste Verbraucher bei geöffnetem Netzschalter völlig stromlos ist, ist der in dem ersten Verbraucherkreis liegende Schalter vorgesehen. Dieser ist in Abhängigkeit von der Stellung des Netzschalters gesteuert und bildet mit dem Netzschalter in Reihenschaltung den ersten Verbraucherkreis. Der zweite Verbraucherkreis ist ein Gleichstromkreis, der von dem Gleichrichter gespeist wird.

Erfindungsgemäß ist vorgesehen, dass das Schließen des weiteren Schalters durch einen in dem zweiten Verbraucherkreis liegenden Stromdetektor veranlasst wird, wenn der im zweiten Verbraucherkreis fließende Strom infolge der Einschaltung des Netzschalters einen Schwellwert erreicht. Als Schalter kann ein mechanischer Relaiskontakt benutzt werden oder auch ein elektronischer Schalter, z.B. ein Transistor. Ein mechanischer Schaltkontakt hat den Vorteil einer physischen (galvanischen) Auftrennung des ersten Verbraucherkreises.

Der zweite Verbraucherkreis kann parallel zu dem zweiten Verbraucher eine Stabilisierungsschaltung enthalten. Ferner kann im zweiten Verbraucherkreis ein Gleichspannungswandler enthalten sein, der aus der zur Verfügung stehenden Gleichspannung eine Verbrauchsspannung mit einem anderen Wert erzeugt. Ein solcher Gleichspannungswandler ist beispielsweise ein Step-Down-Wandler, der die geglättete Gleichrichterspannung auf einen bestimmten Wert, beispielsweise 9 Volt, reduziert. Je nach Anforderung des zweiten Verbraucherkreises kann der Gleichspannungswandler auch aus einem Step-up-Wandler bestehen, der die geglättete Gleichrichterspannung auf einen höheren Wert transformiert.

Im Folgenden werden unter Bezugnahme auf die Zeichnungen Ausführungsbeispiele der Erfindung näher erläutert.

Es zeigen:
- Fig. 1: eine Darstellung der Einbausituation der Versorgungsschaltung in einem Raum,
- Fig. 2: ein schematisches Schaltbild der Versorgungsschaltung und ihrer Verbindungen mit dem Netzschalter und den beiden Verbrauchern, und
- Fig. 3: ein weiteres Ausführungsbeispiel der Versorgungsschaltung mit einer Potentialtrennung des zweiten Verbraucherkreises von dem ersten Verbraucherkreis.

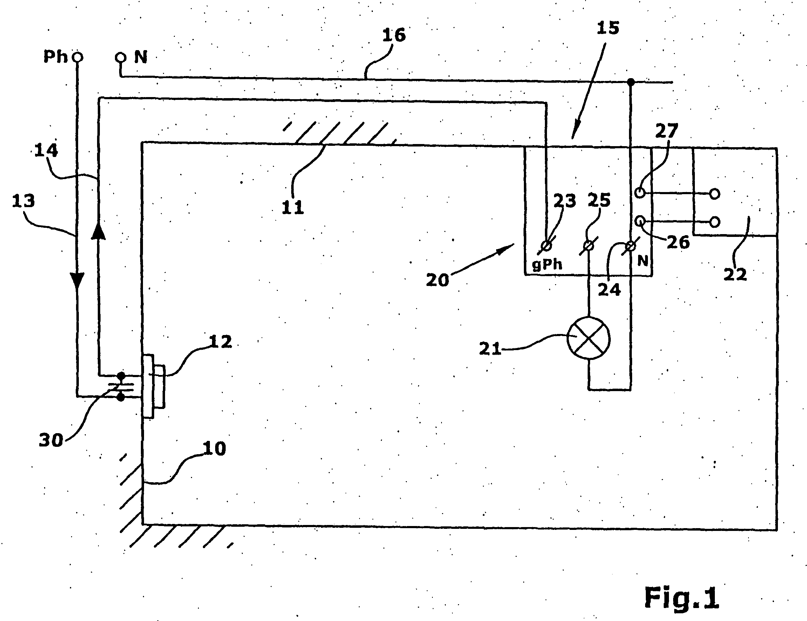

In Figur 1 ist eine Wand 10 und eine Decke 11 eines Raumes dargestellt. An der Wand 10 ist ein Netzschalter 12 installiert, der an eine mit Ph bezeichnete Phasenleitung 13 des installierten elektrischen Versorgungsnetzes angeschlossen ist. Von dem Netzschalter 12 geht eine ebenfalls unter Putz liegende geschaltete Versorgungsleitung 14 ab, die mit gPh (geschaltete Phase) bezeichnet ist.

Die geschaltete Phasenleitung 14 führt zu einem Deckenauslass 15 in der Decke 11. Am Deckenauslass 15 wird auch durch eine Leitung 16 ein Nullleiter N zur Verfügung gestellt.

Am Deckenauslass 15 ist die Versorgungsschaltung 20 installiert. An diese ist der erste Verbraucher 21 angeschlossen, bei dem es sich hier um eine Leuchte handelt, welche durch den Netzschalter 12 geschaltet wird. Ferner ist an die Versorgungsschaltung der zweite Verbraucher 22 angeschlossen, bei dem es sich hier um einen permanent zu versorgenden Rauchmelder 22 handelt, der ebenfalls unter der Decke 11 montiert ist.

Die Versorgungsschaltung 20 weist gemäß Figur 1 eine Klemme 23 auf, an die die Leitung 14 angeschlossen wird, und Klemmen 24,25, an die die Leuchte 21 angeschlossen wird. Die Klemme 24 ist mit Leitung 16 verbunden. An Klemme 25 wird die Versorgungsspannung für den aus der Leuchte bestehenden ersten Verbraucher 21 zur Verfügung gestellt.

Außerdem sind an der Versorgungsschaltung zwei Klemmen 26 und 27 für den Anschluss des zweiten Verbrauchers 22 vorgesehen, der hier aus dem Rauchmelder besteht. Die Versorgungsschaltung 20 bewirkt unabhängig von der Stellung des Netzschalters 12 eine permanente Versorgung des zweiten Verbrauchers 22, während der erste Verbraucher 21 in Abhängigkeit von der Stellung des Netzschalters 12 geschaltet und versorgt wird.

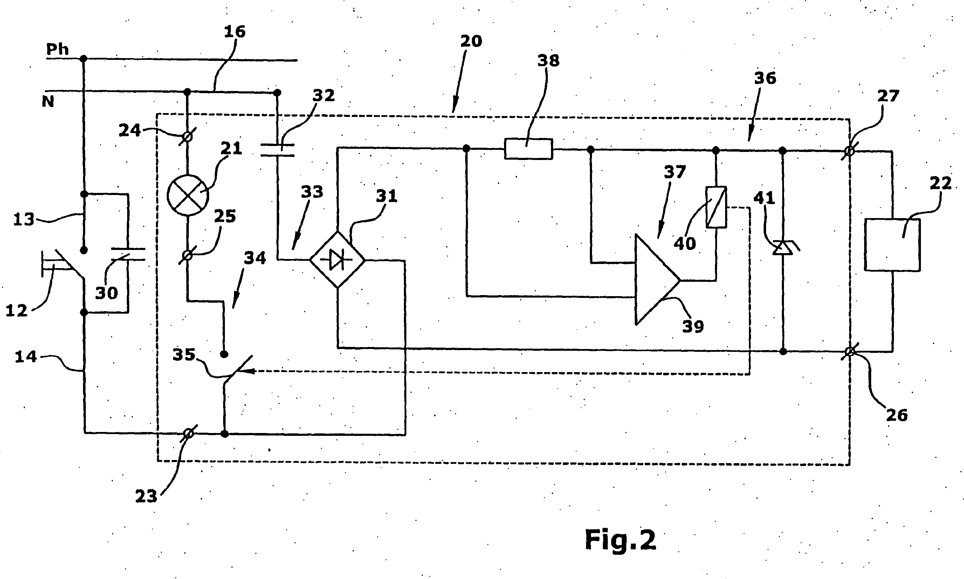

In Figur 2 ist der Aufbau der Versorgungsschaltung 20 dargestellt. Zunächst ist der Schalter 12 durch einen ersten Blindwiderstand 30 in Form eines Kondensators überbrückt. Der Blindwiderstand 30 befindet sich physisch im ersten Schalter 12, also außerhalb des Gehäuses der Versorgungsschaltung 20, obwohl er zur Versorgungsschaltung gehört.

In der Versorgungsschaltung 20 ist ein Gleichrichter 31 in Form eines Doppelweggleichrichters vorgesehen. Dieser bildet zusammen mit dem ersten Blindwiderstand 30 und einem zweiten Blindwiderstand 32, ebenfalls in Form eines Kondensators, eine Reihenschaltung 33 zwischen Phase Ph und Nullleiter N.

Der erste Verbraucherkreis 34 besteht aus der Reihenschaltung des Netzschalters 12, eines noch zu erläuternden weiteren Schalters 35 und des ersten Verbrauchers 21. Der erste Verbraucherkreis 34 ist an Phase Ph und Nullleiter N angeschlossen.

Ein zweiter Verbraucherkreis 36 ist an den Ausgang des Gleichrichters 31 angeschlossen. Der zweite Verbraucherkreis 36 enthält einen Stromdetektor 37 aus einem Reihenwiderstand 38 und einem mit den beiden Enden des Reihenwiderstandes verbundenen Differenzverstärker 39. Der Reihenwiderstand 38 ist ein Strommesswiderstand. Wenn der Strom im zweiten Verbraucherkreis 36 einen Schwellwert übersteigt, schaltet der Differenzverstärker 39 ein Relais 40, das den Schalter 35 betätigt. Durch das Einschalten des Netzschalters wird die Impedanz 30 überbrückt, und damit wird die Gesamtimpedanz im zweiten Verbraucherkreis geringer. Dann übersteigt der Strom im zweiten Verbraucherkreis 36 den Schwellwert des Stromdetektors 37, wodurch das Relais 40 den Schalter 35 schließt. Dieser Schalter bleibt solange geschlossen wie der Netzschalter 12 geschlossen ist. Wird der Netzschalter 12 geöffnet, fällt das Relais 40 wieder ab und der Schalter 35 öffnet ebenfalls. Der Schalter 35 wird also mit einer geringfügigen Verzögerung synchron mit dem jeweiligen Schaltzustand des Netzschalters 12 gesteuert.

Der zweite Verbraucherkreis 36 enthält die Klemmen 26 und 27, an die der zweite Verbraucher 22 angeschlossen ist. Parallel hierzu ist eine Spannungsstabilisierungsschaltung 41 vorgesehen, die u.a. eine Zenerdiode enthält und einen (nicht dargestellten) Glättungskondensator. Außerdem kann in dem zweiten Verbraucherkreis 36 ein (nicht dargestellter) Gleichspannungswandler enthalten sein, der eine Gleichspannung auf einen niedrigeren oder höheren Wert umsetzt.

Bei geöffnetem Schalter 12 fließt durch die Reihenschaltung 33 aus den Blindwiderständen 30 und 32 und dem dazwischen angeordneten Gleichrichter 31 ein Wechselstrom. Der Kondensator des ersten Blindwiderstandes 30 hat etwa die Hälfte der Kapazität des zweiten Blindwiderstandes 32. Am Ausgang des Gleichrichters 31 wird eine pulsierende Gleichspannung erzeugt. Da der Netzschalter 12 geöffnet ist, ist auch der Schalter 35 geöffnet und der erste Verbraucher 21 ist inaktiv. Über den zweiten Verbraucherkreis 36 wird der zweite Verbraucher 22 mit Gleichspannung versorgt.

Wird der Netzschalter 12 geschlossen, so wird die Impedanz 30 überbrückt und die Gesamtimpedanz im Gleichrichterstromkreis verringert. Dadurch erhöht sich der Strom im zweiten Verbraucherkreis 36. Durch das Ansprechen des Relais 40 wird der Schalter 35 geschlossen, so dass der erste Verbraucher 21 nunmehr mit Wechselstrom versorgt wird. Der zweite Verbraucher 22 wird wie vorher mit Gleichstrom versorgt. Daher ist der erste Verbraucher 21 ein geschalteter Verbraucher und der zweite Verbraucher 22 ein permanent versorgter Verbraucher.

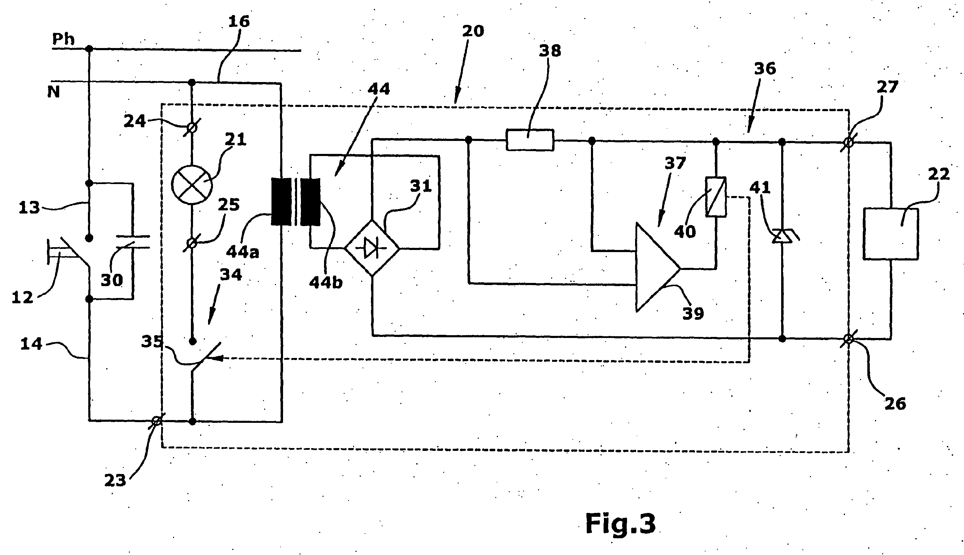

Figur 3 zeigt ein Ausführungsbeispiel mit galvanischer Entkopplung zwischen dem ersten und dem zweiten Verbraucherkreis. Der Gleichrichter 31 ist nicht mehr direkt in der Reihenschaltung 33 aus Figur 2 enthalten. Vielmehr wird der Blindwiderstand 32 durch die Primärwicklung 44a eines Übertragers 44 ersetzt. Die Primärwicklung 44a des Übertragers ist in der Reihenschaltung 33 enthalten und die Sekundärwicklung 44b ist mit dem Eingang des Gleichrichters 31 verbunden. Dadurch wird der zweite Verbraucher 22 potentialfrei gehalten.

Der zweite Verbraucher 22 kann ein Funkmodul zum Aussenden eines Meldesignals enthalten.

## Patentansprüche

1. Versorgungsschaltung zur schaltbaren Versorgung eines ersten Verbrauchers (21) und zur permanenten Versorgung eines zweiten Verbrauchers (22) durch eine mit einem Netzschalter (12) schaltbare zweiadrige Leitung, mit
einem den Netzschalter (12) überbrückenden ersten Blindwiderstand (30), der zusammen mit einem zweiten Blindwiderstand (32) eine an die Netzspannung anschließbare Reihenschaltung zur Speisung eines Gleichrichters bildet,
einem den ersten Verbraucher (21) enthaltenden ersten Verbraucherkreis (34),
einem von dem Gleichrichter (31) versorgten zweiten Verbraucherkreis (36), der den zweiten Verbraucher (22) enthält,
und einem in dem ersten Verbraucherkreis (34) liegenden weiteren Schalter (35), der durch das Schließen des Netzschalters (12) geschlossen wird,
**dadurch gekennzeichnet, dass**
das Schließen des weiteren Schalters (35) durch einen in dem zweiten Verbraucherkreis (36) liegenden Stromdetektor (37) veranlasst wird, wenn der im zweiten Verbraucherkreis fließende Strom infolge der Einschaltung des Netzschalters einen Schwellwert überschreitet.

2. Versorgungsschaltung nach Anspruch 1, **dadurch gekennzeichnet, dass** der zweite Verbraucherkreis (36) parallel zu dem zweiten Verbraucher eine Spannungsstabilisierungsschaltung (41) enthält.

3. Versorgungsschaltung nach Anspruch 1 oder 2, **dadurch gekennzeichnet, dass** der zweite Verbraucherkreis (36) einen Gleichspannungswandler enthält, der aus einer höheren Gleichspannung eine niedrigere Verbraucherspannung erzeugt.

4. Versorgungsschaltung nach Anspruch 1 oder 2, **dadurch gekennzeichnet, dass** der zweite Verbraucherkreis (36) einen Gleichspannungswandler enthält, der aus der zur Verfügung stehenden geglätteten Gleichrichterspannung eine höhere Verbraucherspannung erzeugt.

5. Versorgungsschaltung nach einem der Ansprüche 1 - 4, **dadurch gekennzeichnet, dass** die die Blindwiderstände (30,32) enthaltende Reihenschaltung (33) über einen Übertrager (44) zur Potentialtrennung mit dem Gleichrichter (31) verbunden ist.

6. Versorgungsschaltung nach einem der Ansprüche 1 - 5, **dadurch gekennzeichnet, dass** der zweite Verbraucher (22) ein Brandmelder ist.

7. Versorgungsschaltung nach einem der Ansprüche 1 - 6, **dadurch gekennzeichnet, dass** der zweite Verbraucher (22) ein Funkmodul zum Aussenden eines Meldesignals enthält.

8. Versorgungsschaltung nach einem der Ansprüche 1 - 7, **dadurch gekennzeichnet, dass** die beiden Blindwiderstände (30,32) in der Reihenschaltung auf verschiedenen Seiten des Gleichrichters (31) angeordnet sind.

## Claims

1. Supply circuit for the switchable supply of a first load (21) and for the permanent supply of a second load (22) via a two-wire line adapted to be switched by means of a mains switch (12), comprising
a first reactance (30) bridging the mains switch (12) and forming a series circuit together with a second reactance (32), which series connection is adapted to be connected to the mains power to supply a rectifier,
a first load circuit (34) including the first load (21),
a second load circuit (36) including the second load (22) and being supplied by the rectifier (31),
and a further switch (35) located in the first load circuit (34), which is closed by closing the mains switch (12),
**characterized in that**
closing said second switch (35) is caused by a current detector (37) located in said second load circuit (36), when the current flowing in the second load circuit exceeds a threshold value due to the mains switch being switched on.

2. The supply circuit of claim 1, **characterized in that** the second load circuit (36) includes a voltage stabilizing circuit (41) parallel to the second load.

3. The supply circuit of claim 1 or 2, **characterized in that** the second load circuit (36) includes a DC voltage converter generating a lower DC voltage from a higher DC voltage.

4. The supply circuit of claim 1 or 2, **characterized in that** the second load circuit (36) includes a DC voltage converter generating a higher load voltage from the available smoothed rectifier voltage.

5. The supply circuit of one of claims 1 - 4, **characterized in that** the series circuit (33) including the reactances (30, 32) is connected to the rectifier (31) via a transducer (44) for potential separation.

6. The supply circuit of one of claims 1 - 5, **characterized in that** the second load (22) is a fire detector.

7. The supply circuit of one of claims 1 - 6, **characterized in that** the second load (22) includes a radio module for emitting a status signal.

8. The supply circuit of one of claims 1 - 7, **characterized in that** the two reactances (30, 32) are arranged on different sides of the rectifier (31) in the series connection.

## Revendications

1. Circuit d'alimentation pour alimenter de façon commutable un premier consommateur (21) et alimenter en permanence un deuxième consommateur (22) au moyen d'un conducteur à deux brins commutable avec un commutateur de réseau (12), comportant
- une première réactance (30), shuntant le commutateur de réseau (12) et formant, avec une deuxième réactance (32), un circuit en série raccordable à la tension de réseau pour alimenter un redresseur,
- une première boucle de consommateur (34) contenant le premier consommateur (21),-
- une deuxième boucle de consommateur (36) alimentée par le redresseur (31) et contenant le deuxième consommateur (22),
- et un autre commutateur (35), situé dans la première boucle de consommateur (34), qui est fermé par la fermeture du commutateur de réseau (12),
**caractérisé en ce que**
la fermeture de l'autre commutateur (35) est lancée par un détecteur de courant (37) placé dans la deuxième boucle de consommateur (36) quand le courant circulant dans la deuxième boucle de consommateur dépasse, par suite de l'enclenchement du commutateur de réseau, une valeur de seuil.

2. Circuit d'alimentation suivant la revendication 1, **caractérisé en ce que** la deuxième boucle de consommateur (36) comporte, en parallèle avec le deuxième consommateur, un circuit de stabilisation de la tension (41).

3. Circuit d'alimentation suivant la revendication 1 ou 2, **caractérisé en ce que** la deuxième boucle de consommateur (36) contient un convertisseur de tension continue, qui produit, à partir d'une tension continue plus élevée une tension de consommateur plus basse.

4. Circuit d'alimentation suivant la revendication 1 ou 2, **caractérisé en ce que** la deuxième boucle de consommateur (36) contient un convertisseur de tension continue, qui produit, à partir de la tension lissée dont on dispose, une tension de consommateur plus élevée.

5. Circuit d'alimentation suivant l'une des revendications 1 à 4, **caractérisé en ce que** le circuit en série (33) comportant les réactances (30, 32) est relié au redresseur (31) par l'intermédiaire d'un translateur (44) pour la séparation de potentiel.

6. Circuit d'alimentation suivant l'une des revendications 1 à 5, **caractérisé en ce que** le deuxième consommateur (22) est une alarme d'incendie.

7. Circuit d'alimentation suivant l'une des revendications 1 à 6, **caractérisé en ce que** le deuxième consommateur (22) comporte un module radio pour émettre un signal d'alerte.

8. Circuit d'alimentation suivant l'une des revendications 1 à 7, **caractérisé en ce que** les deux réactances (30, 32) sont disposées dans le circuit en série sur des côtés différents du redresseur (31).
